# EUROPEAN PATENT APPLICATION

(11) **EP 1 341 272 A2**
(43) Date of publication of application: **03.09.2003**
(21) Application number: 03250198.3
(22) Date of filing: 13.01.2003
(51) Int. Cl.: H01S 3/063, H01S 5/50, H01S 5/10, H01S 3/23

(54) **Three-dimensional optical amplifier structure**

(30) Priority: 15.01.2002 CA 2368031; 01.02.2002 CA 2370037
(71) Applicant: JDS Uniphase Corporation, San Jose, CA 95131 (US)
(72) Inventor: Georges, Patrick, Palaiseau 91120 (FR); Balembois, François, Gometz la Ville 91400 (FR); Devilder, Pierre Jean, 38660 Sainte Marie Du Mont (FR); Forget, Sebastien, Arcueil 94110 (FR)
(74) Representative: McKechnie, Neil

(57) **Abstract**

A multi-pass three-dimensional amplifier structure in which a beam to be amplified traverses an amplifier medium multiple times through distinct multiple paths. The distribution of the multiple paths being such that the volume occupied by said multiple paths inside the amplifier medium substantially overlaps with the volume of the amplifier medium being optically pumped by an optical pump beam. Also, the distribution of said optical paths being such that no more than two of the multiple paths lie in a same plane.

## Description

### RELATED APPLICATIONS

This application claims priority from Canadian patent application number 2,368,031 filed January 15, 2002 and from Canadian patent application number 2,370,037 filed February 1, 2002.

### FIELD OF THE INVENTION

The present invention relates to an optical amplifier, and in particular to a three-dimensional optically pumped amplifier structure for lasers.

### BACKGROUND OF THE INVENTION

Production of short pulses with high energy per pulse is usually achieved by a combination of one oscillator and one amplifier. The oscillator is traditionally a mode-locked laser producing very short pulses, typically less than 100 ps, at high frequency, typically a few tens of MHz, and with low energy per pulse, typically a few nJ. To increase the pulse energy to several µJ, one uses an amplifier working at a lower repetition rate from a few kHz to a few hundreds of kHz, depending on the pumping configuration. These systems are complex and complicated to use because they involve active modulation (acousto-optic or electro-optic), highspeed electronics, short-pulse production for the oscillator, and injection and synchronization of the pulses inside the amplifier.

Passively Q-switched lasers using Nd-doped crystals can produce high peak power pulses of several kW at a wavelength of 1064 nm. Depending on the experimental setup, the pulse width can vary from a few tens of ns (A. Agnesi, S. Dell'Acqua, E. Piccinini, G. Reali and G. Piccinno, "Efficient wavelength conversion with high power passively Q-switched diode-pumped neodymium laser", IEEE, J. Q. E., Vol. 34, 1480-1484, 1998) to a few hundreds of ps (J. J. Zayhowski, "Diode-pumped passively Q-switched picosecond microchip lasers", Opt. Lett., Vol. 19, 1427-1429, 1994). For example, pulses of 19 ns and 108 µJ can be obtained at 25 kHz and 1064 nm from a diode-pumped Nd:YAG laser with a Cr⁴⁺ :YAG saturable absorber crystal. The high peak power of these lasers allows efficient wavelength conversion into the ultra-violet (UV) range with optically nonlinear materials (A. Agnesi, S. Dell'Acqua, E. Piccinini, G. Reali and G. Piccinno, "Efficient wavelength conversion with high power passively Q-switched diode-pumped neodymium laser", IEEE, J. Q. E., Vol. 34, 1480-1484, 1998; J. J. Zayhowski, "Diode-pumped passively Q-switched picosecond microchip lasers", Opt. Lett., Vol. 19, 1427-1429, 1994; J. J. Zaykowski, "UV generation with passively Q-switched microchip laser", Opt. Lett., Vol. 21, 588-590, 1996).

To reduce the pulse width, while using the same material combination, one must combine the active medium and the saturable absorber in a short distance to reduce the cavity length to about 1 mm. A microchip laser combines the two materials in a monolithic crystal (J. J. Zaykowski, "Non linear frequency conversion with passively Q-switched microchip lasers", CLEO 96, paper CWA6, 23 6-237, 1996) to reduce the energy to approximately 8 µJ at 1064 nm. The two materials, i.e. the laser material and the saturable absorber, can be connected by thermal bonding, or the saturable absorber can be grown by liquid phase epitaxy (LPE) directly on the laser material (B. Ferrand, B. Chambaz, M. Couchaud, "Liquid Phase Epitaxy: a versatile technique for the development of miniature optical components in single crystal dielectric media", Optical Materials 11, 101, 1998). At the same time, in order to obtain sub-nanosecond pulses, the saturable absorber must be highly doped to lower the repetition rate, e.g. 6-8 kHz with Nd:YAG. The wavelength conversion efficiency from infrared (IR) to UV is in the order of 4 %. A solution to simultaneously obtain short pulses and a high repetition rate is to combine a Nd:YVO₄ crystal, whose short fluorescence lifetime is well suited for a higher repetition rate, with a semiconductor-based saturable absorber in an anti-resonant Fabry-Perot structure (B. Braun, F. X. Kdarner, G. Zhang, M. Moser, U. Keller, "56 PS passively Q-switched diode-pumped microchip laser", Opt. Lett., 22, 381-383, 1997). Unfortunately this structure is nevertheless complex and very difficult to produce.

It is therefore difficult to simultaneously produce sub-nanosecond short pulses, at frequencies of a few tens of kHz, with several micro-Joule per pulse in a simple and compact system. Another solution consists of combining a compact oscillator, producing short pulses at high frequency, with an amplifier to increase the pulse energy. Amplifiers have been used in the past with pulsed microlasers. After amplification, pulses with 87 nJ (small-signal gain of 3.5) at 100 kHz have been produced using a 10-W diode bar as a pump (C. Larat, M. Schwarz, J. P. Pocholle, G. Feugnet, M. Papuchon, "High repetition rate solid-state laser for space communication", SPIE, Vol. 2381, 256-263). A small-signal gain of 16 has been obtained with an 88-pass complex structure using two 20-W diode bars as a pump (J. J. Degnan, "Optimal design of passively Q-switched microlaser transmitters for satellite laser ranging", Tenth International Workshop on Laser Ranging Instrumentation, Shanghai, China, Nov. 11-15, 1996). In these two examples, the amplification efficiency that can be defined as the ratio between the small-signal gain and the pump power is small because the transverse pumping has a low efficiency due to the poor overlap of the gain areas with the injected beam. Furthermore, these setups use Nd:YAG crystals not suited for high-frequency pulses (the fluorescence lifetime is 230 µs).

A combination of Nd ions in two different hosts, in an oscillator-amplifier system, has been performed in the past in continuous wave (CW) (H. Plaesmann, S. A. Re, J. J. Alonis, D. L. Vecht, W. M. Grossmann, "Multipass diode-pumped solid-state optical amplifier", Opt. Lett., 18, 1420-1422, 1993) or pulsed mode (C. Larat, M. Schwarz, J. P. Pocholle; G. Feugnet, M. Papuchon, "High repetition rate solid-state laser for space communication", SPIE, Vol. 2381, 256-263). In these cases, the spectral distance between the emission lines of the two different materials, i.e. Nd:YAG and Nd:YVO₄, limits the small-signal gain to a value lower than that obtained when only Nd:YVO₄ is used in both the oscillator and the amplifier; the aforementioned spectral distance is comprised between 5.5 cm⁻¹ and 7.0 cm⁻¹ (J. F. Bernard, E. Mc Cullough, A. J. Alcock, "High gain, diode-pumped Nd:YVO₄ slab amplifier", Opt. Commun., Vol. 109, 109-114, 1994).

A number of amplification schemes using Nd ions in crystals have been studied, but often end up with complex multipass setups, with low efficiency due to transverse pumping.

End-pumped single-pass or double-pass amplification schemes based on guiding structures to increase the interaction length between the pump beam and the injected beam have been studied in the past: in planar guides (D. P. Shepherd, C. T. A. Brown, T. J. Warburton, D. C. Hanna and A. C. Tropper, "A diode-pumped, high gain, planar waveguide Nd:Y₃ Al₅ O₁₂ amplifier", Appl. Phys. Left., 71, 876-878, 1997) or in double-cladding fibers (E. Rockat, K. Haroud, R. Dandliker, "High power Nd-doped fiber amplifier for coherent intersatellite links", IEEE, JQE, 35, 1419-1423, 1999; I. Zawischa, K. Plaman, C. Fallnich, H. Welling, H. Zellner, A. Tunnermann, "All solid-state neodymium band single frequency master oscillator fiber power amplifier system emitting 5.5 W of radiation at 1064 nm", Opt. Lett., 24, p. 469-471, 1999). These schemes are, however, not suited for high-peak-power pulses because unwanted nonlinear effects, such as the Raman effect, start to appear around 1 kW of peak power.

A high small-signal gain of 240 was achieved in an end-pumped double-pass bulk Nd:YLF amplifier, but it was used with a CW laser with an expensive diode-beam shaping optical setup (G. J. Friel, W. A. Clarkson, D. C. Hanna, "High gain Nd:YLF amplifier end-pumped by a beam shaped bread-stripe diode laser", CLEO 96, paper CTUL 28, p. 144, 1996).

US Patent No 6,373,864, Georges *et al.*, issued April 16, 2002 discloses an entirely passive laser system both for the generation and amplification of short pulses. In the Georges *et al.* invention, the oscillator directly produces µJ pulses at the required repetition rate, and the pulses are amplified after only a few passes in a non-synchronized amplifier. The uniqueness of that approach was to combine an optically pumped, passively Q-switched, high frequency, Nd:YAG microchip laser producing short pulses with an optically end-pumped Nd:YVO₄ amplifier producing high small-signal gain while pumped at low power. The use of the two materials, Nd:YAG and Nd: YVO₄, allowed the best use of their respective properties: Nd:YAG/Cr⁴⁺:YAG microchip lasers are simpler and easier to manufacture than Nd:YVO₄ microchips because they use the same crystal (YAG) for the laser medium and the saturable absorber, and can be produced in a collective fashion. In addition they produce shorter pulses except in the case of the semiconductor saturable absorber described in B. Braun, F. X. Kartner, G. Zhang, M. Moser, U. Keller, "56 ps passively Q-switched diode-pumped microchip laser", Opt. Lett., 22, 381-383, 1997. Nd:YVO₄ is on the other hand well suited for amplification due to its high stimulated emission cross section. It is also better suited than Nd:YAG for higher repetition rates due to a shorter fluorescence lifetime (100 µs instead of 230 µs).

In the invention disclosed be Georges *et al.*, the light beam to be amplified initially gets passed through the amplifier medium along a first path and subsequently gets reflected back through the amplifier medium along a second path, thereby traversing the amplifier medium twice. The planar geometry used by Georges *et al.* is not optimal since the pump beam propagates in three dimensions whereas the light beam to be amplified travels in a single plane. This results in poor overlap between the volume occupied in the amplifier medium by the pump beam and the volume occupied in the amplifier medium by the light beam to be amplified. Georges *et al.* alludes to multi-pass scenarios wherein the light beam to be amplified traverses the amplifier medium at least twice. Such multi-pass amplification schemes are known. For instance, McIntyre discloses co-linear and two-dimensional multi-pass amplification schemes in US Patent No. 5,268,787, issued December 7, 1993. Plaessmann *et al*., in US Patent No. 5,546,222, issued August 13, 1996 discloses a multi-pass laser amplifier that uses optical focussing between subsequent passes through a single gain medium. The multi-pass laser amplification schemes disclosed by Plaessman *et al.* are all two-dimensional schemes, i.e. the multi-paths of the light beam traversing the amplifier medium all lie in a same plane. The number of optical components used in the embodiments taught by Plaessman *et al.* is relatively small and consequently, the alignment of said components is crucial in view of the multi-pass amplification scheme.

Three-dimensional amplification schemes are also known. C. LeBlanc *et al*., "Compact and efficient multipass Ti:sapphire system for femtosecond chirped-pulse amplification at the terawatt level", Optics Letters, Vol. 18, No. 2, Pp. 140-142, January 15, 1993, discloses a Ti:sapphire crystal amplifier medium pumped at two ends by Nd:YAG light and traversed 8 times by the light beam to be amplified. The light beam to be amplified traverses the amplifier medium four times in a first plane and four other times in a distinct second plane parallel to the first plane. Another three-dimensional amplification scheme is that of Scott *et al.,* "Efficient high-gain laser amplification from a low-gain amplifier by use of self-imaging multipass geometry", Applied Optics, Vol. 40, No. 15, Pp. 2461-2467, 20 May 2001. Scott *et al.* illustrates how the light beam to be amplified traverse the amplifier medium four times in a first plane and four additional times in a distinct other plane parallel to the first plane. A phase-conjugate mirror is then used to double the number of passes.

The three-dimensional amplification schemes discussed above are quite complex and not well suited for miniaturization.

### SUMMARY OF THE INVENTION

An object of the invention is to provide a method for amplifying a light beam comprising the step of passing a light beam through an amplifying medium along multiple paths, wherein no more than two of the multiple paths lie in a same plane.

A further object of the invention is to provide an optical amplifier stage for amplifying a light beam comprising:
a) a first lens having a collimating end, a focussing end, an optical axis, and a focal point lying on the optical axis, the first lens for receiving the light beam at the collimating end for directing the light beam towards the focal point along a path s₁;
b) an amplifying medium disposed along the optical axis for amplifying the light beam propagating along s₁;
c) a reflector disposed for reflecting the light beam back through the amplifier medium towards the focussing end of the first lens along a path s₂ to amplify the light beam, wherein s₁ and s₂ lie in a same plane P₁;
d) N redirecting means {R₁, R₂, R₃,...,R_{N}}, N being a natural number, disposed adjacent the collimating end of the lens;
   wherein redirecting means Rₓ, x being a natural number between 1 and N, is for receiving the light beam having propagated along the path s₂ₓ, and for redirecting the light beam through the first lens back through the amplifier medium along a path s₂ₓ₊₁ to amplify the light beam;
   wherein, s₂ₓ₊₁ and s₂₍ₓ₊₁₎ lie in a same plane Pₓ₊₁; and,
   wherein all the planes are distinct.
A further object of the invention is to provide an optical amplifier stage for amplifying a light beam comprising:
   a) a lens having a collimating end, a focusing end, an optical axis, and a focal point lying on the optical axis, the lens for receiving the light beam at the collimating end, and for directing the light beam towards the focal point;
   b) an amplifying medium disposed along the optical axis for amplifying the light beam traveling therethrough;
   c) a reflector for reflecting the light beam back through the amplifying medium towards the focusing end of the lens; and
   d) at least one reflecting means disposed adjacent the collimating end of the lens, each reflecting means for receiving the light beam from the reflector via the amplifying medium and the lens, and for reflecting the light back through the lens and the amplifying medium to the reflector;
   wherein each time the light beam passes back and forth between the reflector and one of the reflecting means the light beam travels in a different plane through the amplifying medium.

### BRIEF DESCRIPTION OF THE DRAWINGS

**Fig. 1** is a schematic illustration of a prior art laser system;
**Figs. 2a and 2b** is a schematic illustration of a prior art optically pumped amplifier structure;
**Fig. 3** is a schematic illustration of an embodiment of the present invention; and,
**Fig. 4** is a cross-sectional view of an amplifier medium of the embodiment of Fig. 3;
**Fig. 5** is a schematic illustration of an alternative embodiment of the present invention;
**Fig. 6** is a cross-sectional view of an amplifier medium of the embodiment of Fig. 5;
**Figs. 7a** and **7b** are schematic illustrations of a redirecting means in the form of a recirculating fiber; and
**Figs. 8a** and **8b** are schematic illustrations showing the equivalent performance of a roof prism compared to two mirrors.

### DETAILED DESCRIPTION OF THE INVENTION

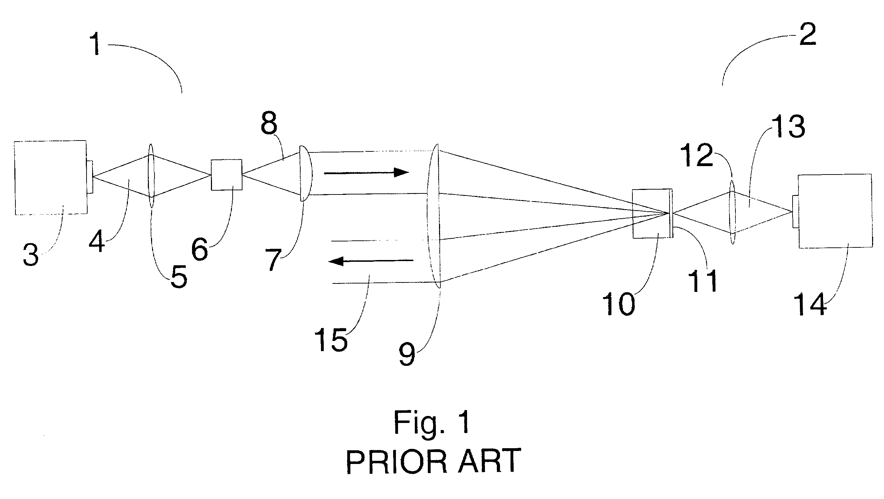

Figure 1 depicts a conventional entirely passive laser system for both the generation and amplification of short pulses, the full description of which is found in US Patent No. 6,373,864, issued to Georges *et al.* on April 16, 2002. The Georges *et al.* laser system comprises a first sub-system; i.e. a microchip laser stage **1,** and a second sub-system; i.e. an amplifier stage **2.** In the microchip laser stage **1,** a first pump laser **3** emits a first pumping radiation **4,** which is directed by a first lens **5** towards a microchip laser **6**. The microchip laser **6** comprises reflective elements, a first gain medium and a saturable absorber, all of which are not depicted. A microchip laser beam **8** is directed by lenses **7** and **9** towards an amplifying medium **10** which is optically pumped by a second pump laser **14,** whose pumping radiation **13** is directed towards the amplifying medium **10** by a lens **12.** A dichroic filter **11,** transparent to pumping radiation **13** and reflective to the microchip laser beam **8,** is disposed at an end of the amplifying medium **10.** The pumping radiation **13**, generated by pump laser **14**, is transmitted through the dichroic filter **11** and excites the amplifier medium **10,** while the microchip laser beam **8,** traversing the amplifying medium **10** a first time for a first amplification, is reflected by the dichroic filter **11** back through the amplifying medium **10** a second time for a second amplification. A twice-amplified microchip laser beam **15** is directed by lens **9** to an optical circuit (not shown).

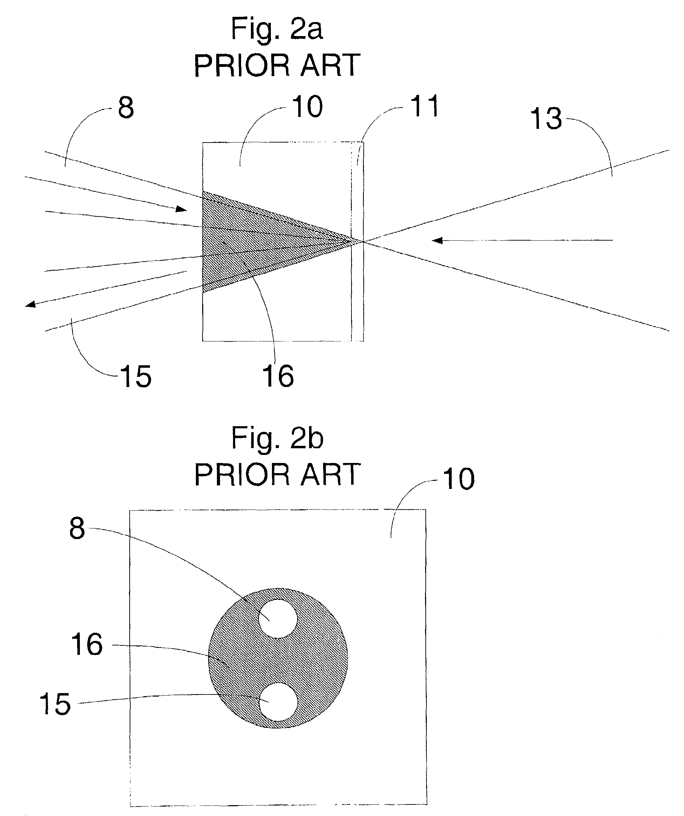

Figures 2a and 2b illustrate the amplifying medium **10** being pumped by the pumping radiation **13**. Shaded area **16** depicts a cross-sectional view of the volume being optically pumped by the pumping radiation **13**. It is apparent from figures 2a and 2b that the optically pumped volume **16** of the amplifying medium **10** is not being substantially overlapped by the microchip laser beam **8** and the twice-amplified microchip laser beam **15**.

The present invention addresses the poor overlap situation by disclosing a three-dimensional amplification scheme that sees the beam to be amplified travel along multiple paths inside the amplifier medium with the combined volume occupied by the multiple paths inside the amplifier medium substantially overlapping with the volume occupied by the optical pump beam. This provides a laser system with high gain and good efficiency.

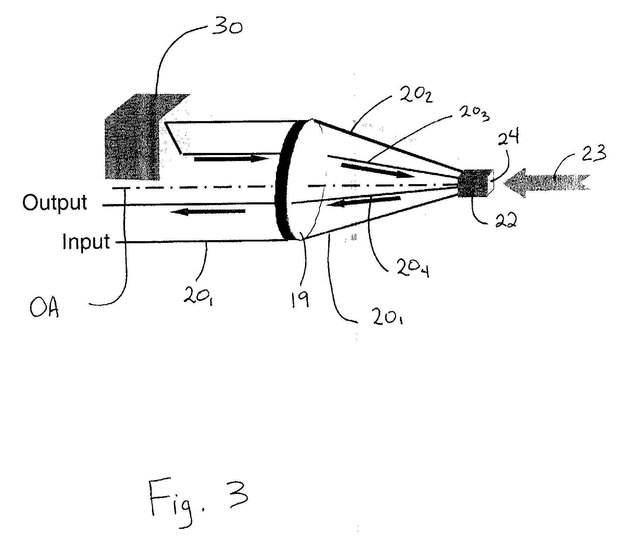

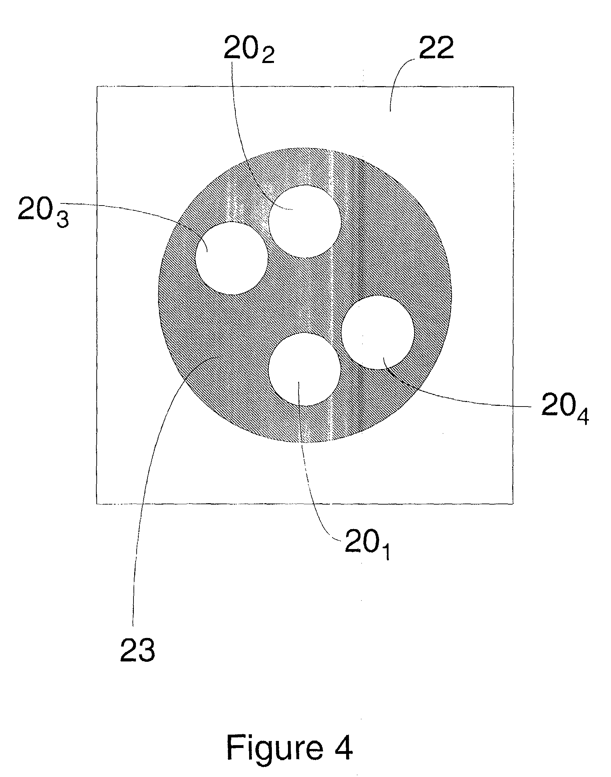

Figure 3 depicts a preferred embodiment of the present invention. A beam of light to be amplified **20**_{**1**} propagates parallel to the optical axis (OA) of a lens **19** and is directed by the lens **19** towards an amplifier medium **22,** which is being optically pumped at a wavelength λₚ by a pump beam **23** through a dichroic filter **24** transparent to λₚ. The beam **20**_{**1**}**,** having a wavelength λ₁, traverses the amplifier medium **22** for a first time along a first path for a first amplification and is reflected by the dichroic filter **24.** The reflected beam **20**_{**2**} traverses the amplifier medium a second time for a second amplification along a second path and is directed by the lens **19** towards a reflector in the form of a corner cube **30.** The corner cube **30** displaces the beam **20**_{**2**} into a displaced beam **20**_{**3**} and reflects the beam **20**_{**3**} back towards the lens **19,** which directs the beam **20**_{**3**} along a third path towards the amplifier medium **22** for a third amplification. The dichroic filter **24** reflects the beam a second time and the reflected beam **20**_{**4**} traverses the amplifier medium for a fourth amplification along a fourth path. Subsequently, the beam **20**_{**4**} is directed towards an output port, preferably via the lens 19. It is important to note that the plane defined by the first and second paths and the plane defined by the third and fourth paths are distinct due to the beam-displacing action of the corner cube **30**. Having distinct planes imply that the combined volume occupied by the beam paths inside the amplifier medium **22** is greater than it would be were it not for the presence of the corner cube **30**. Figure **4** shows a cross-sectional view of the amplifier medium **22** and a pump beam area **23** populated by areas occupied by the light beam to be amplified as it propagates along the first, second, third and fourth paths here labeled by the corresponding beam numerals **20**_{**1**}**, 20**_{**2**}**, 20**_{**3**} and **20**_{**4**}**.** Although the embodiment just described has the input beam **20**_{**1**} and the output beam **20**_{**4**} traversing the lens **19,** it is not necessary that they do so for the invention to work.

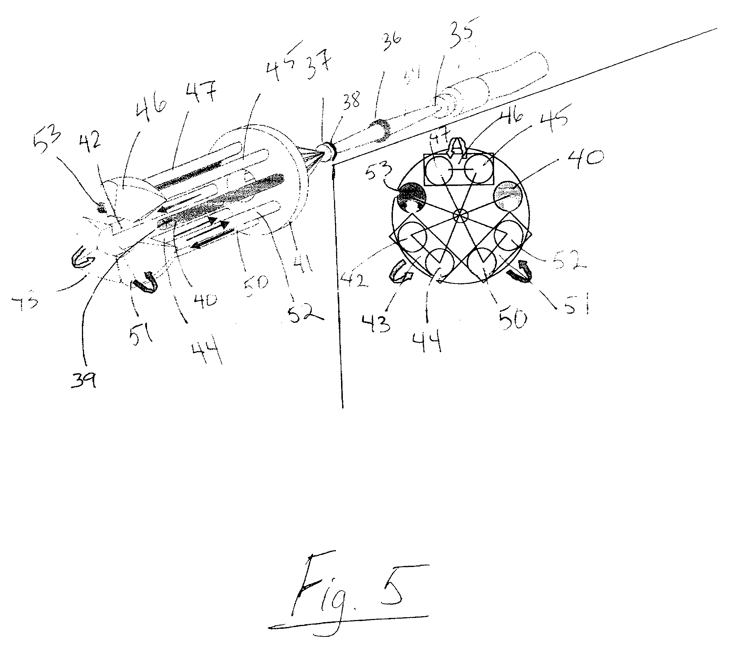

Figure 5 depicts an alternative embodiment of the present invention. In Fig. **5**, the output pump beam **34** of a fiber coupled diode array **35** is imaged by a lens **36** on an amplifier medium **37** through a dichroic filter **38.** A light beam to be amplified **39** propagates along a first path **40** towards a lens **41**, which directs the beam **39** towards the amplifier medium **37** and the dichroic filter **38**. The dichroic filter **38** reflects the light beam **39** back through the amplifier medium **37** and towards the lens **41**, which directs beam **39** along a second path **42** to a first roof prism **43**. The roof prism **43** reflects and displaces the beam **39** to propagate along a third path **44** towards the lens **41**, which directs the beam **39** towards the amplifier medium **37** and the dichroic filter **38**. Again, the dichroic filter **38** reflects the beam **39** for propagation through the amplifier medium **37** and towards the lens **41**, which directs the beam **39** along a fourth path **45** to a second roof prism **46**. The roof prism **46** reflects and displaces the beam **39** to propagate along a fifth path **47** towards the lens **41**, which directs beam **39** through the amplifier medium **37** to the dichroic filter **38**. Once more, the dichroic filter **38** reflects the beam **39** through the amplifier medium **37** and towards the lens **41**, which directs the beam **39** along a sixth path **50** to a third roof prism **51**. The roof prism **51** reflects and displaces the beam **39** to propagate along a seventh path **52** towards the lens **41**, which directs beam **39** through the amplifier medium **37** to dichroic filter **38**. And again, the dichroic filter **38** reflects the beam **39** for propagation through the amplifier medium **37** and towards the lens **41**, which directs the beam **39** along an eight path **53** towards an output port (not shown). The beam **39** is amplified each time it traverses the amplifier medium **37** and consequently, according to the description just given, is amplified eight times.

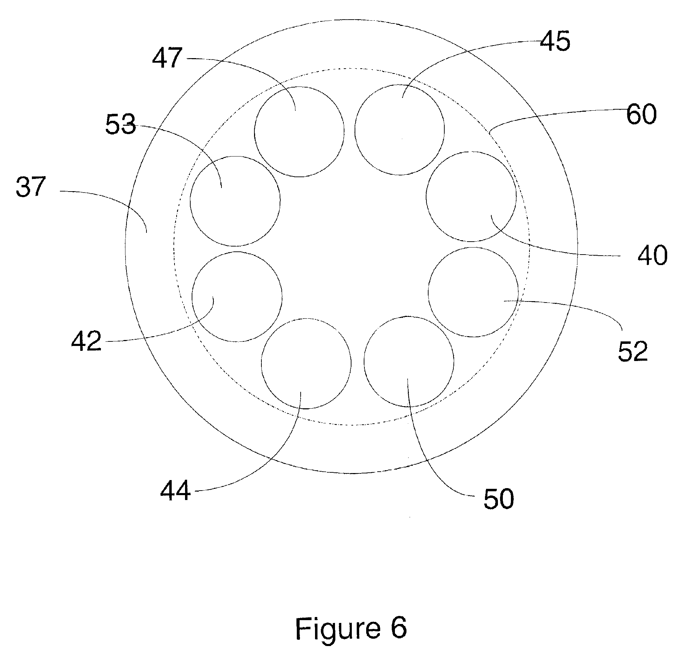

Figure **6** shows a cross-sectional view of the amplifier medium **37** with a concentric dashed circle **60** representing the area of the cross-section being optically pumped by the pump beam **34**. Also shown in Fig. **6** are the areas of beam **39** traveling along the various paths **40, 45, 47, 53, 42, 44, 50,** and **52** as they intercept the cross-section of the pump beam. One can observe in Fig. **6** that the area covered by beam paths **40, 45, 47, 53, 42, 44, 50,** and **52** substantially overlap the area **60** covered by the pump beam **34**.

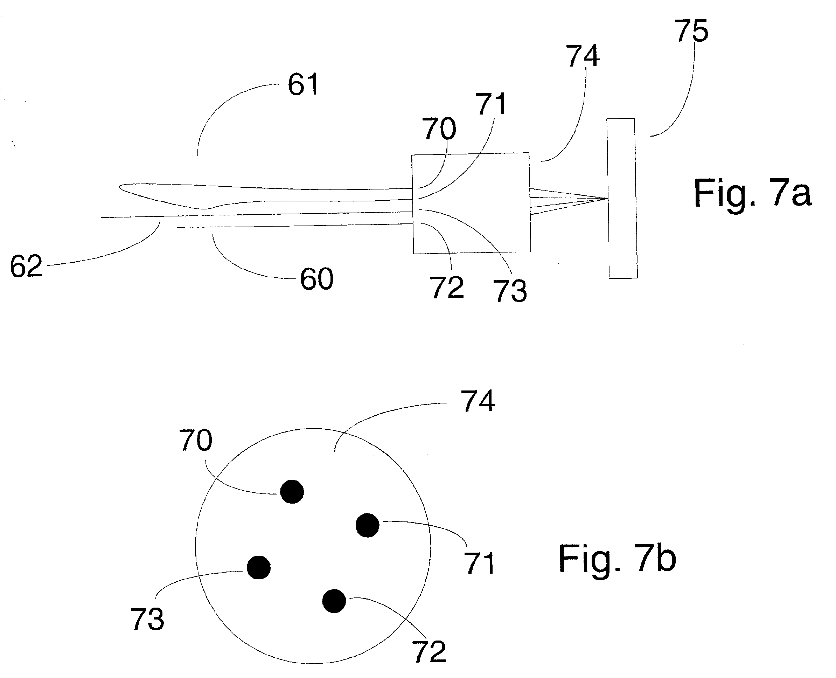

It should be clear to those skilled in the art that the corner cube of the former embodiment and the roof prisms of the latter embodiment can be replaced by a number of equivalent redirecting means. Such alternative redirecting means include recirculating fiber and mirrors. For example, Fig. **7a** illustrates how a recirculating fiber **62** can be used to replace the roof prisms or the corner cube of the previously described embodiments. In Fig. **7a**, a beam of light **60** propagates towards a lens **74,** intersects the lens **74** at a port **72** and is directed along a first path by the lens **74** towards a reflector **75**. The beam **60** is then reflected towards the lens **74** along a second path by the reflector **75** and is directed by the lens **74** towards a first end of a recirculating fiber **61**, said first end located at port **70**. The beam **60** propagates through the recirculating fiber **61** and exits the recirculating fiber **61** at port **71**. The beam **60** is then directed along a third path by the lens **74** towards the reflector **75**. The beam **60** is then reflected towards the lens **74** along a fourth path by the reflector **75** and is directed by the lens **74** towards a port **73**. The beam of light **60** then exits the port **73** as an output beam **62**. In Fig. **7a**, the first and second paths form a first plane, the third and fourth paths form a second plane and the first and second planes are distinct. Since Fig. **7a** was meant to illustrate how a recirculating fiber can serve as a redirecting means equivalent to corner cubes and roof prisms, the amplifier medium present in the aforementioned embodiments was left out. Fig. **7b** is frontal view of the side of the lens **74** having the ports **70**, **71, 72** and **73**.

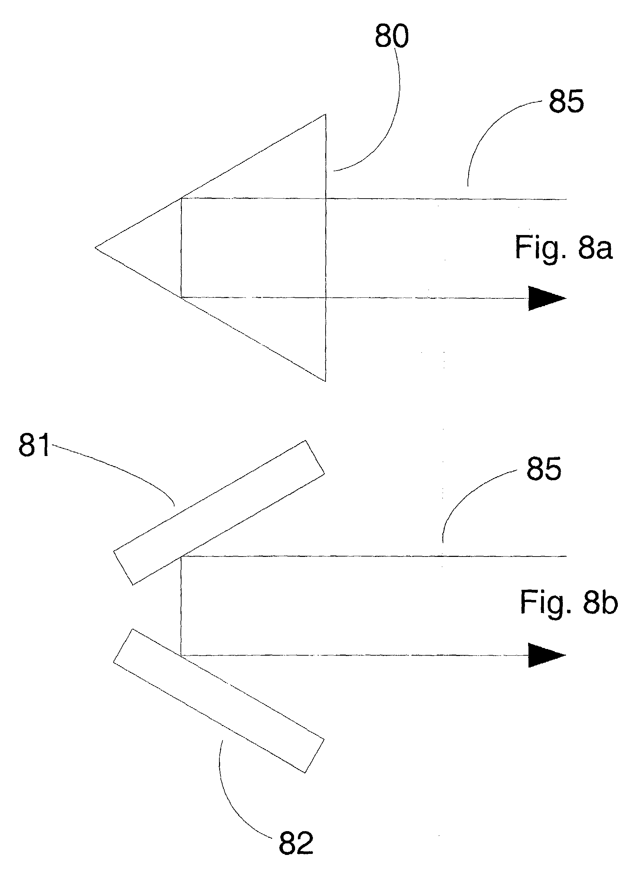

As another example of redirecting means, figures **8a** and **8b** show how mirrors can perform the equivalent task of a roof prism. In Fig. **8a** one can see an optical beam **85** entering a roof prism **80** and being redirected by the roof prism **80**. Fig. **8b** shows how the two mirrors **81** and **82** perform the same function as the roof prism **80** on the beam **85**. Although not illustrated, one will understand that a combination of mirrors can function as a corner cube.

Many types of amplifier medium can be envisaged in the present invention. Amongst others, Nd:YVO₄, Nd:YAG, Yb:YAG, Er:glass and Yb:glass can all be utilized as the amplifier medium.

It is possible to devise embodiments other than the ones described here without departing from the spirit and scope the present invention.

## Claims

1. An optical amplifier stage for amplifying a light beam comprising:
a) a first lens having a collimating end, a focusing end, an optical axis, and a focal point lying on the optical axis, the first lens for receiving the light beam at the collimating end for directing the light beam towards the focal point along a path s₁;
b) an amplifying medium disposed along the optical axis for amplifying the light beam propagating along s₁;
c) a reflector disposed for reflecting the light beam back through the amplifier medium towards the focusing end of the first lens along a path s₂ to amplify the light beam, wherein s₁ and s₂ lie in a same plane P₁;
d) N redirecting means {R₁, R₂, R₃,...,R_{N}}, N being a natural number, disposed adjacent the collimating end of the lens;
wherein redirecting means Rₓ, x being a natural number between I and N, is for receiving the light beam having propagated along the path s₂ₓ, and for redirecting the light beam through the first lens back through the amplifier medium along a path s₂ₓ₊₁ to amplify the light beam;
wherein, s₂ₓ₊₁ and s₂₍ₓ₊₁₎ lie in a same plane Pₓ₊₁; and,
wherein all the planes are distinct.

2. An optical amplifier stage for amplifying a light beam comprising:
a) a lens having a collimating end, a focusing end, an optical axis, and a focal point lying on the optical axis, the lens for receiving the light beam at the collimating end, and for directing the light beam towards the focal point;
b) an amplifying medium disposed along the optical axis for amplifying the light beam traveling therethrough;
c) a reflector for reflecting the light beam back through the amplifying medium towards the focusing end of the lens; and
d) at least one reflecting means disposed adjacent the collimating end of the lens, each reflecting means for receiving the light beam from the reflector via the amplifying medium and the lens, and for reflecting the light back through the lens and the amplifying medium to the reflector;
wherein each time the light beam passes back and forth between the reflector and one of the reflecting means the light beam travels in a different plane through the amplifying medium.

3. An optical amplifier stage as described in claim **1 or 2,** further comprising an optical pump for pumping the amplifier medium with an optical pump beam;
wherein
the light beam is at a wavelength λ₁;
the pump beam is at a wavelength λ₂; and
the reflector is substantially reflective at λ₁ and substantially transmissive at λ₂;
wherein the optical pump beam is transmitted through the reflector to optically pump the amplifying medium.

4. An optical amplifier stage as described in claim **2**, further comprising a second lens for focusing the optical pump beam to a focal point located proximate the reflector, said optical pump beam diverging passed the focal point, wherein the optical pump beam transmitted through the reflector is for illuminating a pumping volume of the amplifying medium, said pumping volume being a function of focusing properties of the second lens;
wherein the paths are distributed in said pumping volume to substantially overlap with the pumping volume.

5. An optical amplifier stage as described in claim **3**, wherein the focal point of the second lens is located between the second lens and the amplifying medium, whereby the pumping volume of the amplifier medium is in the form of a conical frustum.

6. An optical amplifier stage as described in any one of claims **1** to 5, wherein each the redirecting means is selected from a group consisting of mirrors, roof prisms, corner cubes and recirculating fibers.

7. An optical amplifier stage as described in any one of claims **1 to 6,** wherein said amplifying medium is selected from a group consisting of Nd:YVO₄, Nd:YAG, Yb:YAG, Er:glass and Yb:glass.

8. A laser system for emitting a pulsed light beam comprising:
a microchip laser for emitting pulsed laser radiation, said microchip laser having:
two reflective elements defining an optical resonator for laser radiation, a laser gain medium placed inside said resonator and a saturable absorber medium placed inside said resonator for passively Q-switching said laser radiation, said reflective elements, said gain medium and
said saturable absorber medium being rigidly and irreversibly bonded such as to form a monolithic body, and
an optical pump source for emitting pumping radiation which impinges on said monolithic body and excites said gain medium to emit a pulsed laser radiation light beam; and
an optical amplifier stage as defined in any one of claims **1 to 7** for amplifying the pulsed laser radiation light beam;
the microchip laser and optical amplifier being mutually arranged such that the laser radiation light beam emitted by the microchip laser is amplified by the optical amplifier.

9. A method for amplifying a light beam comprising the step of passing a light beam through an amplifying medium along multiple paths, wherein no more than two of the multiple paths lie in a same plane.

10. A method for amplifying a light beam as described in claim 9, further comprising the step of pumping a pump volume of the amplifying medium with a pump beam, wherein the pump volume and a volume comprising the multiple paths substantially overlap.
